# EUROPEAN PATENT SPECIFICATION

(11) **EP 3 218 689 B1**
(45) Date of publication and mention of the grant of the patent: **21.11.2018**
(21) Application number: 16775855.6
(22) Date of filing: 05.08.2016
(51) Int. Cl.: G01N 1/30, G01N 1/36

(54) **FIXATIVE COMPOSITION FOR SAMPLES OF BIOLOGICAL MATERIAL**
FIXATIV ZUSAMMENSETZUNG FÜR PROBEN BIOLOGISCHER MATERIALIEN
COMPOSITION FIXATIVE POUR ECHANTILLONS DE MATERIAUX BIOLOGIQUES

(30) Priority: 13.08.2015 IT UB20153115
(43) Date of publication of application: 20.09.2017
(73) Proprietor: Diapath S.p.A., 24057 Martinengo (BG) (IT)
(72) Inventor: LUPO, Carmelo, 24057 Martinengo (BG) (IT)
(74) Representative: Trupiano, Federica
(86) International application number: PCT/IB2016/054726
(87) International publication number: WO 2017/025872

(56) References cited:
- WO-A1-95/34656
- WO-A1-03/044005
- WO-A2-2009/003428

## Description

Object of the present invention is a novel fixative composition for samples of biological material.

As known, biological samples that are withdrawn concomitantly to biopsy interventions, surgery or during autopsy, before being analyzed under a microscope must undergo a series of treatments, which are generally indicated by the term "processing". The first step of the processing treatment, following the withdrawal of one or more samples of biological material to be analyzed, consists of the so-called fixation. The fixation step consists in subjecting the tissue to chemical agents and sometimes to physical agents quickly denaturizing the proteins.

The best fixatives are those precipitating the proteins in the finest form, possibly in ultramicroscopic enclosures, so that the morphology is not modified. All of the fixatives must be prepared as isotonic solutions at neutral pH, with the purpose of avoiding collapsing or swelling phenomena of the samples, due to osmotic stress. The fixation step of a biological sample is extremely important, as it has the purpose to quickly and fully interrupt the autolytic processes triggering in the cell and tissues when the latter are no longer nourished and oxygenated. It further allows preserving the samples from the attack of molds and bacteria that may proliferate and further allows preserving the structural and ultrastructural morphology of tissue and cell at best. The choice of the most suitable fixative depends on various factors such as, for example, the sample size, the nature of cells we wish preserve, the degree of preservation of the sample we wish reach.

The fixation represents a very important stage of the processing method of a biological sample, on which the success of the corresponding histological preparation to be analyzed depends. In fact, the fixation allows maintaining the structural framework of the tissues as unaltered as possible.

Among the most used various fixative agents, such as for example, ethyl alcohol and acetic acid, formaldehyde or formic aldehyde, of chemical formula CH₂O, is one of the most used fixative agents, thanks to its characteristics making it able to act slowly. Formaldehyde, that is a colorless gas, highly soluble in water but also very toxic, used in aqueous solution (the gas and water mixture is commonly called formalin), has high degree of penetration, doesn't cause excessive hardening of tissues, doesn't dissolve lipids.

As already mentioned, formaldehyde is a very toxic compound.

The current EU regulation n.605/2014 of 05.06.2014 introduced, compared to the previous regulation, some modifications regarding the toxicity of formaldehyde. In particular, according to regulation previously into force, formaldehyde was defined as "Limited evidence of a carcinogenic effect (Cat.3 -R40)", whereas currently, based on the new regulation, formaldehyde is defined as "May cause cancer (Cat.2 - R45)". Consequently, formaldehyde currently is officially defined as a carcinogen substance. Thus, it is evident that precautions already used for its use must be further modified, improved and meant to reduce to zero the risks of contact/inhalation by the operators of this product.

The use of formaldehyde in a normal and well equipped lab doesn't involve particular problems, since operators work "under the hood", namely work in continuous suction of possible fumes and vapors that can develop from the products they come in contact with. The operator's face, as well as protected from glasses, is often separated by a glass from the worktop, which is however subject to suitable suction, so that in case of releases of fume and/or vapor, they don't come in any way in contact with the operator but are directly sucked and suitably abated.

The problem arises when the sample of biological material is withdrawn from the originating organism and must be immediately dipped in the fixative solution, and namely in formaldehyde or better in formalin (i.e. in the aqueous solution of formaldehyde). In this case, and namely still at the time of the withdrawal of a sample of biological material, the operator cannot work under the hood but must necessarily operate in such conditions as risking to inhale and coming in direct contact with formaldehyde fumes and/or vapors. In fact the operator, who will be the surgeon performing the surgery or the doctor making the autopsy examination, or persons assigned for the withdraw the sample of biological material, must necessarily withdraw the sample and placing it inside a vessel of suitable size depending on size of the withdrawn biological material, inside which there is such an amount of formalin so as to be able to completely cover the sample. In case of samples of small size even the size of the container, and thus consequently the amount of formalin, will be small, thus making the direct exposure of the operator to formalin quicker and least harmful, even if still absolutely to be avoided.

Instead, in case of samples of bigger size (if you think, for example, to the withdrawal of an entire organ, or the withdrawal of a significant section of intestine, the amputation of a limb), it is evident that the container, which the sample has to be placed in, must have significantly bigger size and, consequently, also the amount of formalin contained therein will be significantly higher than that being in containers of smaller size. Thus, the risk of exposure will be proportionally higher for the operator that will have higher likelihood to come in contact with a carcinogen and toxic substance.

Thus, in the specific case related to the use of formaldehyde (or formalin, 37% solution of formaldehyde in water) for the fixation step of the samples of biological material, it is necessary to find an alternative to the need of dipping or however place in direct contact the biological sample with formaldehyde immediately after the withdrawal, thus exposing the operator to the risk of direct contact with formaldehyde, in particular direct inhalation of the vapors of such a substance.

Such a requirement is felt even more important in case of biological samples of big size, for which the amount of formaldehyde in which the sample needs to be dipped in, is significantly higher.

Thus, it looks evident the need to provide a fixative composition for samples of biological material allowing isolating the formalin (or aqueous solution of formaldehyde), in which the withdrawn sample needs to be dipped in, from the external environment and consequently allowing avoiding its evaporation during the opening operations of the container, full dipping of the withdrawn sample and subsequent closure of the container itself.

Thus, it is an object of the present invention a fixative composition for samples of biological material comprising, as essential components, formaldehyde and paraffin. The composition of the present invention is defined in claim 1. The composition of the present invention comprises formaldehyde, water and paraffin, for example in oily liquid form and insoluble in water, also called paraffin oil or Vaseline oil. Thus, the composition according to the invention consists of, in the essential components thereof, a buffered aqueous solution of formaldehyde, otherwise commonly called formalin and paraffin in liquid form, otherwise called paraffin oil or Vaseline oil. The aqueous formaldehyde solution and the paraffin oil form two separate phases.

In one embodiment the composition of the invention comprises a buffered aqueous solution of formaldehyde, otherwise commonly called formalin, paraffin in liquid form and agar, otherwise called agar-agar and/or agarose.

In further embodiments the composition can comprise polyvinylpyrrolidone and/or 1-hexadecanol and/or sodium bisulfite.

In particular, polyvinylpyrrolidone, being advantageously used as a thickener of hydrophilic phases, is present in a range between 0.1-10% by the total weight of the composition.

Cetyl alcohol, also called 1-hexadecanol or palmitic alcohol of brute formula CH₃(CH₂)₁₅OH, is advantageously used according to the present invention, and is present in a range between 0.1-10% by the total weight of the composition.

Sodium bisulfite is advantageously used to further limit the emission of the vapors of formaldehyde, and is present in a range between 0.1-10% by the total weight of the composition.

Paraffin is the current name given to a mixture of solid hydrocarbons, mostly alkanes, whose the molecules have chains with more than 20 carbon atoms. It is obtained from petroleum and appears as a waxy, whitish, mass insoluble in water and in acids. Its CAS number is 92045-76-6. Its main uses are in the manufacturing of candles, lubricants, electrical insulating materials, for the paper coating and for producing cosmetics, oils, children creams and chewing gums. Paraffin, in its oily form, is also called paraffin oil or paraffin mineral oil.

Paraffin oil of cosmetic type is used in manufacturing of products such as creams, lotions and soaps, whereas the pharmaceutical type is sometimes called "Vaseline oil" or "liquid paraffin", it is the most pure form of mineral oil and is used for treating skin diseases, as an excipient, laxative and as carrier for the intradermal administration of drugs. The United States Pharmacopeia (USP), European Pharmacopeia and FDA, institutions strictly regulating the safety of all the products intended for human use, established the purity requirements of the mineral oil of pharmaceutical type, stating that the oil must be 99% pure and must not contain chemical impurities, including bacteria and heavy metals.

Since years paraffin oil is used for treating skin diseases, such as atopic dermatitis, because it is not irritating to the skin, is an effective emollient and is one of the safest known cosmetic ingredients, as it is used since more than 100 years. The oil of pharmaceutical type is subjected to a full purification process reducing to the minimum the risk of allergy or skin sensitization. Further, it is free from toxic polycyclic aromatic compounds and heavy metals, as well as microorganisms destroyed through the manufacturing process itself.

Clinical studies demonstrated that paraffin mineral oil of pharmaceutical type doesn't occlude the pores, is more stable compared to most vegetable oils and, thanks just to its excellent chemical inertness, it is reducing the likelihood of skin intolerances. Children oils containing liquid paraffin are widely present on the market. This ingredient is often refused because it as an oil of mineral origin. But the liquid paraffin, until its purity remains high, is a much appreciated ingredient precisely by virtue of its stability, consistency, barrier function and cost. It is practically impossible to obtain a similar ingredient with superior characteristics.

Thus, the composition object of the invention comprises formaldehyde in aqueous solution (formalin) and paraffin oil in a 40:60 to 95:5 ratio. Preferably, the formalin to paraffin oil ratio is 70:30.

Practically, according to the present invention, the water solution of formaldehyde is added to paraffin oil. In this way, thanks to its water immiscibility characteristics and its density and specific gravity characteristics, the paraffin oil is placed above the formaldehyde solution and creates a kind of "natural plug" preventing the evaporation of formaldehyde and, consequently, the dispersion of its vapors in the external environment.

On the other hand, paraffin oil of pharmaceutical and/or cosmetic grade doesn't in any way interact with the samples of biological material which it comes in contact with at the time of their dipping in the fixative composition according to the invention. But rather, conversely, there's the need to remember that just the paraffin is the material in which said samples are incorporated in a subsequent processing step defined "inclusion", which serves to fix the samples in a solid material allowing the subsequent cut at the microtome and microscope examination.

Consequently, paraffin oil used in the composition according to the invention is fully compatible with the biological sample to be analyzed, doesn't cause any deterioration but rather allows and promotes its optimal preservation.

In an alternative embodiment of the present invention, the composition comprises, in addition to formaldehyde, water and paraffin oil, even agar or agarose, in amounts between 0.005 and 0.5% with respect to the total weight of the composition. Agar-agar, also known as agar, is a polysaccharide used as natural gelling agent and derived from red algae belonging to different genera. From a chemical point of view, it is a polymer mainly constituted by D-galactose units.

Agarose is a polysaccharide purified from the agar-agar that, as already mentioned, is a gelatinous substance in turn isolated by the algae. It is a linear and neutral polymer formed by D-galactose and 3,6-anhydro-L-galactose units, alternately linked with glycoside bonds. Agarose is a water soluble sugar at the boiling temperature, while it becomes solid as it cools down forming a gel thanks to the formation of a three-dimensional matrix constituted through hydrogen bonds between the linear chains.

Still according to the present invention the composition comprises, in another embodiment, in addition to formaldehyde, water and paraffin oil, even cetyl alcohol or palmityl alcohol or 1-hexadecanol, also in the esterified form thereof cetyl-palmitate ester or cetyl palmitate, of brute formula C₁₅H₃₁COOC₁₆H₃₃, derived by extraction from vegetable fats such as for example palm oil and coconut oil. The alternative name of palmityl alcohol is also due to this vegetable source. In this case, as in the case of the composition in the presence of agar, the presence of cetyl alcohol in the composition according to the invention confers a consistency similar to a gel, guarantees the emulsion stability over time, so improving the impermeabilising effect.

Still according to the invention, agar, cetyl alcohol and cetyl-palmitate can be present also in a mixture one to the other.

According to the present invention, the formalin and paraffin oil composition is shaping, inside the container suitable for the collection of the samples of the withdrawn biological material to be analyzed, as a bottom layer constituted by the aqueous solution of formaldehyde, possibly buffered, and an upper layer immiscible with the underlying formalin solution, that prevents the outward passage of formaldehyde vapors released as soon as the container is opened by the operator. The just withdrawn sample of biological material is dipped in the composition according to the invention. The first contact between sample and composition occurs by the phase constituted by the paraffin oil, through which the withdrawn sample is passing to arrive to the aqueous phase of formalin. Similarly, when the sample is extracted from the container, it will pass through the phase constituted by paraffin oil.

Using the composition according to the present invention when the operator, generally the surgeon performing the surgery or the doctor making the autopsy examination or persons assigned for the withdrawal of the sample of biological material, open the container in which the sample has to be put in, he doesn't come in contact with any type of formaldehyde exhalation and/or vapor, since the overlying layer of paraffin oil prevents the formaldehyde vapors from releasing and getting out of the container. This aspect represents a very significant advantage compared to the use of the containers according to the known art, that are filled with formalin only, as it avoids the operator from coming in contact with exhalations of a toxic substance and officially recognized as cancerogenic. Such an advantage is made even more evident in case of containers suitable to house biological samples of medium and big size. In this case, in fact, the amount of formalin needed so that sample is completely dipped is remarkable and, consequently, remarkable is also the amount of formaldehyde evaporating when opening the container and that can be breathed by the operator.

The container itself, filled with a composition comprising paraffin oil and formalin, is within the protection scope of the present invention, as well as a processing method of the samples of biological material, providing for the use of the composition according to the invention.

The preparation of the composition according to the invention, in case it also comprises agar, is occurring by treating the agar in water with the buffer solution and adding the paraffin oil. Alternatively, the agar, water and buffer mixture is heated, thus obtaining a gel cooled down to temperatures below 40°C and subsequently added with paraffin oil. The presence of agar in the composition according to the invention confers a consistency similar to a gel and guarantees the stability of the emulsion over time.

The present invention will be now described in more detail based on the experimental part reported here below, given by way of example only and non-limiting the invention. A comparative study has been made between the composition according to the known art, provided as a filler of the containers for the collection of samples of biological material according to the present invention, and a base of formaldehyde only in water (hereinafter referred to as **F**) and the composition according to the invention, comprising formaldehyde, water and paraffin oil (referred to as **FS**).

The comparative study has been made in order to assess possible fixative variables of the two compositions according to defined time slots, in particular to assess the fixative properties of the composition according to the known art compared to those of the composition according to the invention.

COMPOSITION ACCORDING TO THE KNOWN ART (**F**): buffered neutral formalin COMPOSITION ACCORDING TO THE PRESENT INVENTION (**FS**): buffered neutral formalin plus paraffin oil

This study has been made in order to assess the fixative properties of the composition according to the invention (FS) in comparison with the fixation with traditional method (buffered neutral formalin F).

### COMPARATIVE TESTS OF TYPE 1

The test provided for a comparative study between the fixation characteristics of the two compositions listed below:
- fixation with buffered neutral formalin (composition) (F);
- fixation with the composition according to the invention (buffered neutral formalin + paraffin oil) (FS);

### Characteristics to be tested:

- Dispersion of formalin into the environment;
- "Slowing down" of the fixation time;
- Possible interferences due to the addition of paraffin oil;

### Materials and methods:

- Sampling and fixation of hepatic bovine tissue;
- Fixation steps defined in: 6 hours; 24 hours; 48 hours; 72 hours;
- Subsequent processing, prior to fixation in the above listed steps, of the hepatic withdrawals with Donatello processor in LaboPath;
- Sample inclusion in the control unit Canova at LaboPath;
- Cut of sections in paraffin with the Galileo Auto microtome in LaboPath;
- Microscope examination.
**20/4/2015**

### Container configuration

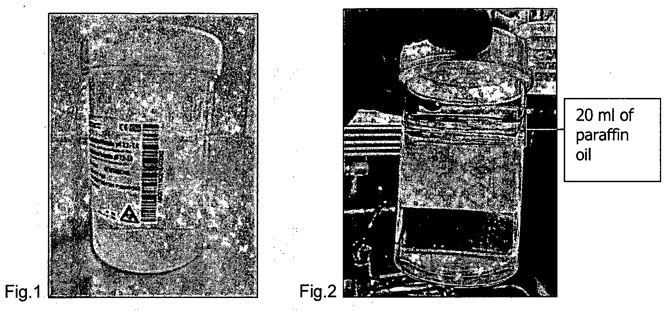

Eight 250 ml containers (pre-filled at 150 ml) containing buffered neutral formalin, pH 7.2-7.4 (composition according to the known art, called composition F) (Fig.1), have been used.

It was decided to add 20 ml paraffin oil in each of four of the aforementioned eight containers, so obtaining the composition according to the present invention (composition FS) (Fig.2)

### Samples used

Hepatic bovine tissue. 8 withdrawals (one per each container), so to be able to work in double to assess possible differences, have been carried out.

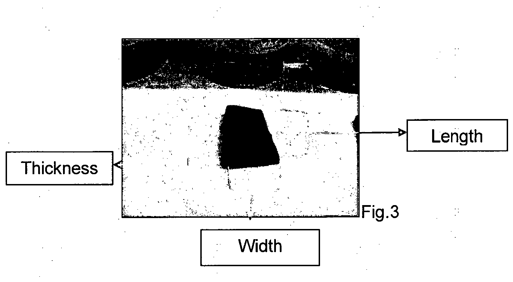

### Withdrawal size - (Fig.3)

length: 3cm
width: 2cm
thickness: 4mm

**Timing**

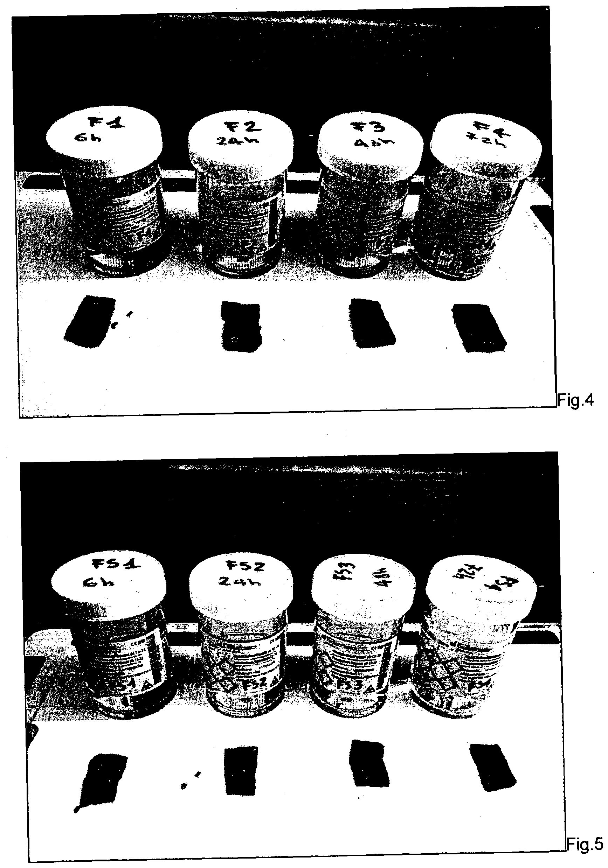

The 8 hepatic withdrawals have been simultaneously dipped in the containers containing neutral formalin pH 7.2-7.4 (Fig.4) (F1, F2, F3, F4 compositions) and neutral formalin pH 7.2-7.4 + paraffin oil (Fig.5) (FS1, FS2, FS3, FS4 compositions) at 10:15 of 20/04/2015. lst processing: 6 h after dipping;
IInd processing: 24 h after dipping;
IIIrd processing: 48 h after dipping;
IVth processing: 72 h after dipping.

### Description of the phenomenon

The withdrawal remains in suspension for a few seconds in dipping the sample in the can containing the composition FS according to the invention. During this permanence it becomes wet in oil and, subsequently, spontaneously precipitates towards the bottom of the container. In this step it can be observed how the oil is detaching from the tissue and coming back to the surface.

The tissue is "rinsed" out of the oil in the dipping step in formalin. In this step, the fixation times listed above have been respected. The tissue sample is again "oily" following the contact with the paraffin oil occurring during the extraction of the same from the container.

### Processing protocol

Keeping in mind the different fixation times inside the containers, processing has been started from water.

The reagent OTTIX PLUS is currently marketed by Diapath S.p.A.

OTTIX PLUS is a reagent ready for use, non-toxic, free from aromatic solvents.

It is able to simultaneously act as a dehydrating and clearing agent in all of the pathological anatomy protocols and is a substitute both of alcohols and solvents, such as xylene and/or toluene.

It allows carrying out the staining with guaranteed results and equivalent to the traditional method in a completely safe way. It is classified as an in vitro diagnostic device.

Ottix Plus contains:
- *EXXSOL DSP 100*/*140 IN BULK*
- *Ethanol*
- *Propan-2-ol*

| | | |
|---|---|---|
| *WATER* | → | *10min* |
| *70% ALCOHOL* | → | *45min* |
| *95% ALCOHOL* | → | *1h* |
| *99% ALCOHOL* | → | *3h* |
| *OTTIX PLUS* | → | *1h* |
| *OTTIX PLUS* | → | *1h* |
| *OTTIX PLUS* | → | *1h* |
| *PARAFFIN* | → | *1h* |
| *PARAFFIN* | → | *1h and 30min* |
| *PARAFFIN* | → | *1h and 30min* |

### F1+FS1

The processing has been started at 16:15 and has duration of 11 h and 55 min stationing in the last paraffin.

### 21/04/2015

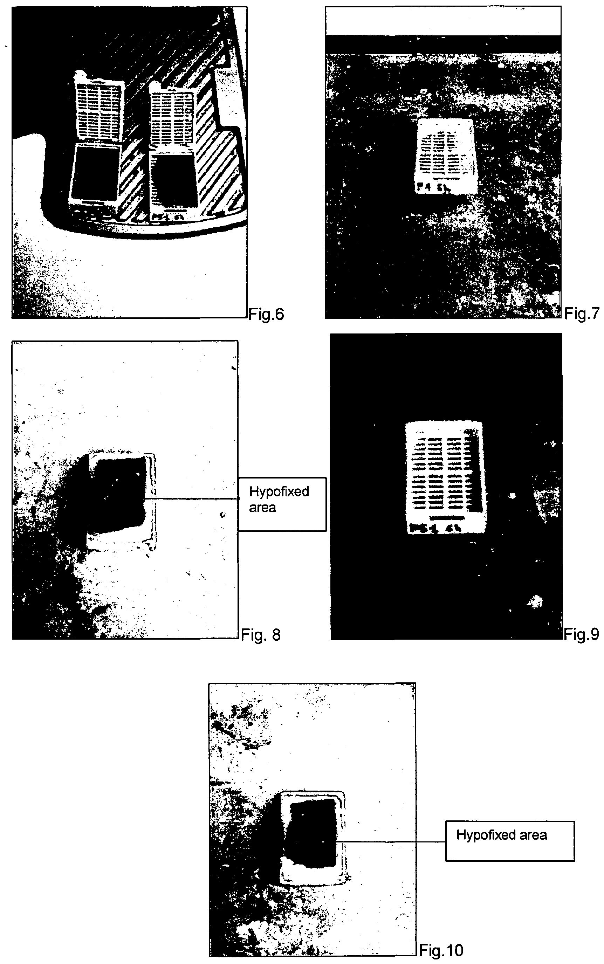

After processing, the samples have been included. (Figs. 6-10) 2µ and 3µ sections which, placed on microscope slides, have been dried in oven at 70 °C for 30 min and stained according to Hematoxylin-Eosin staining protocol in use, have been cut.

### Hematoxylin-Eosin staining protocol

*Ottix Plus 10 min*
*Ottix Plus 10 min*
*Ottix Plus 5 min*
*99% Alcohol 10 min*
*95% Alcohol 5 min*
*70% Alcohol 3 min*
*50% Alcohol 3 min*
*Distilled water 3 min*

### Mayer Hematoxylin 5 minutes

Tap water 5 minutes

### Eosin 2 minutes

Tap water 3 minutes
Distilled water 1 min
95% Alcohol 3 min
95% Alcohol 3 min
99% Alcohol 5 min
Ottix Plus 3 minutes
Ottix Plus 5 min
Ottix Plus 5 min

On the tissue section present on the microscope slide, after having carried out the aforementioned staining protocol, the strut is dispensed and the microscope slide applied.

The observation with an optical microscope follows.

### F2+FS2

After the fixation (24 h), the F2 and FS2 samples have been processed following the same protocol.

### 22/04/2015

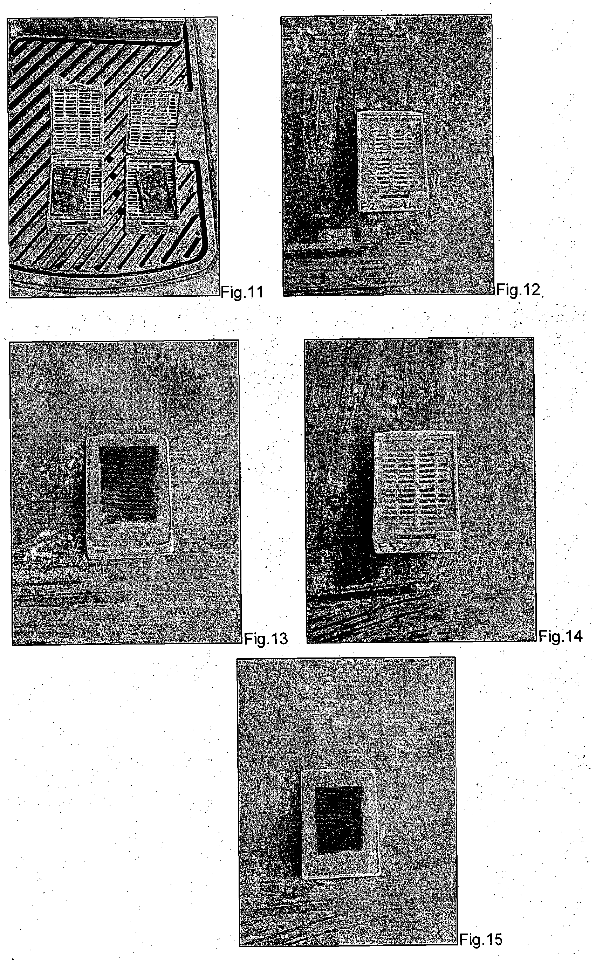

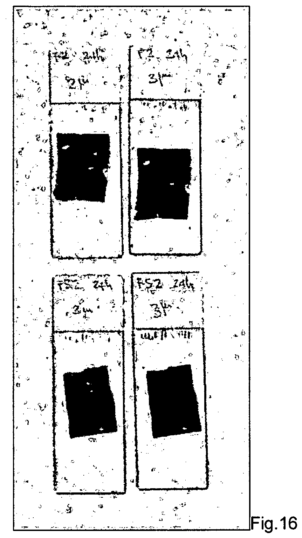

After processing, the samples have been included. (Fig 11-15)
2µ and 3µ sections which, placed on microscope slides, have been dried in oven at 70 °C for 30 min and stained according to Hematoxylin-Eosin staining protocol in use, have been cut. (Fig. 16)

### Results

Adequate fixation in both withdrawals.

### F3+FS3

After the fixation (48 h), the F3 and FS3 samples have been processed.

### 23/04/2015

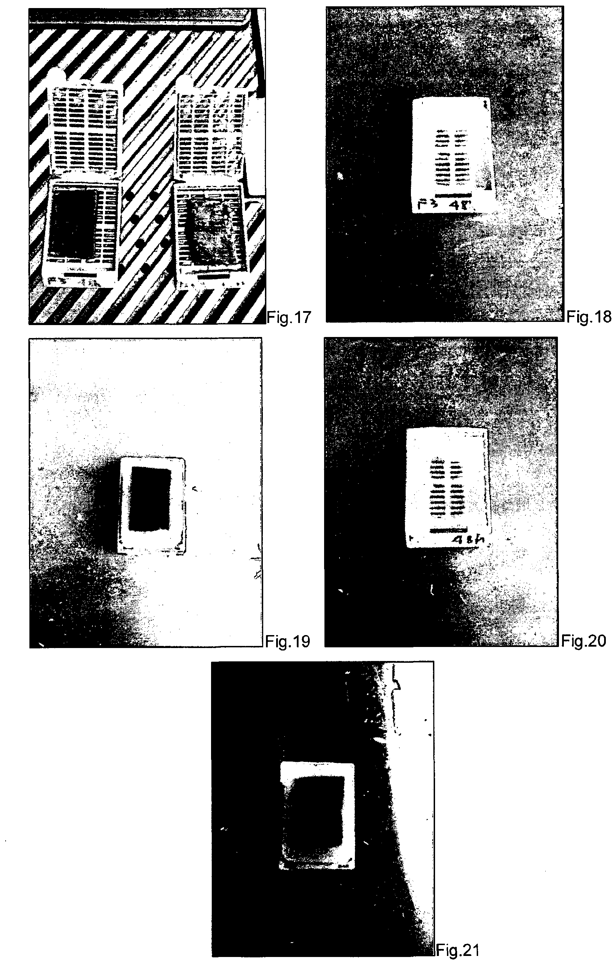

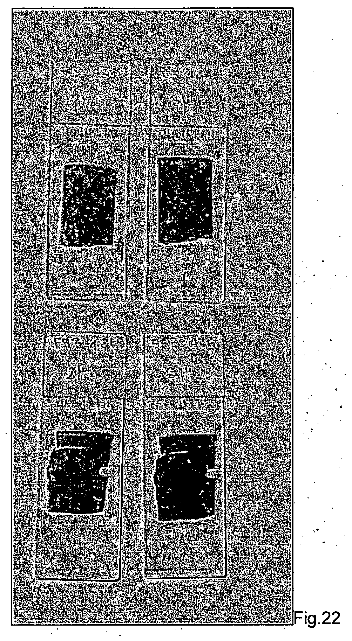

After processing, the samples have been included in paraffin. (Figs. 17-21)
2µ and 3µ sections which, placed on microscope slides, have been dried in oven at 70 °C for 30 min and stained according to Hematoxylin-Eosin staining protocol, have been cut. (Fig. 22)

### Results

Adequate fixation in both withdrawals.

### F4+FS4

After the fixation (72 h), the F4 and FS4 samples have been processed following the same protocol.

### 24/04/2015

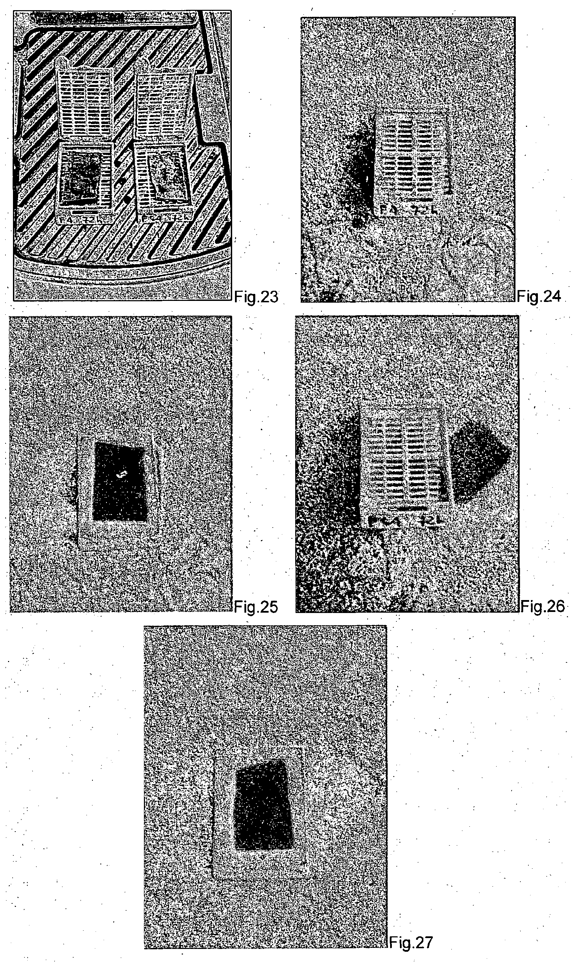

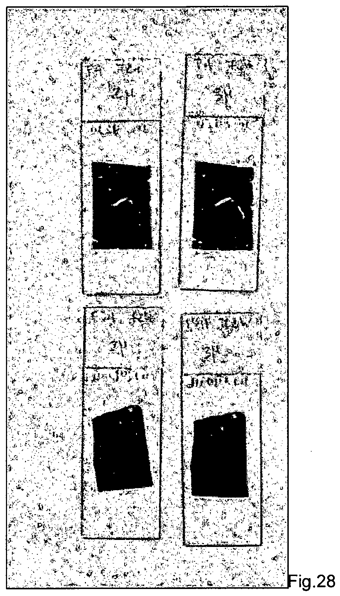

After processing, the samples have been included. (Figs. 23-27)
2µ and 3µ sections which, placed on microscope slides, have been dried in oven at 70 °C for 30 min and stained according to Hematoxylin-Eosin staining protocol, have been cut. (Fig. 28)

### Results

Adequate fixation in both withdrawals.

### Conclusions

The fixation of the hepatic tissues, carried out with the two compositions (composition F according to the known art and composition FS according to the present invention) object of the comparative tests, has been tested according to different fixation times: 6 h, 24 h, 48 h, 72 h.

On the tissue samples treated with the two compositions, macroscopic differences are appreciable in 6 hours: the FS1 tissue is less fixed in the center (phenomenon of delayed fixation).

On the tissue samples treated with the two compositions in 24-48-72 hours, neither macroscopic nor microscopic differences are appreciable.

The hypothesis that the paraffin oil, for its intrinsic hydrophobicity characteristics, could delay the standard fixation being of about 1 mm/hour for the first three hours, occurred in the samples (FS1) fixed in the first 6 hours.

The above described phenomenon of the spontaneous "rinsing" of the post- dipping surgical sample, after briefly staying in the oily phase, de facto clears the "film" that was thought to be able to permanently isolate the sample from the fixative means. The different weight of the oil compared to the aqueous phase makes the oil "droplets" to gradually come back to the surface, thus "freeing" the tissue in the fixative means which it has been dipped in.

This influences the penetration of the formalin in the first 6 hours, whereas the phenomenon of delayed fixation in the subsequent tests (24-48-72 hours) looks less evident.

The carried out tests demonstrated that the composition according to the present invention is inert, doesn't create problems to the biological samples, has no "Risk Phrases" different or in addition to those of the buffered neutral formalin according to the known art.

### COMPARATIVE TESTS OF TYPE 2

### Comparative study among Buffered neutral formalin (composition F) and Formalin with the addition of Paraffin oil - Agar mixture (composition FS-A). Assessment of fixation variables of the two compositions in defined time slots.

Polymerization of the paraffin oil.
Gelling of the paraffin oil by using Agar 0.1 and 0.2%.

The purpose of these further comparative tests is to assess the following aspects:
- Possibility to give to the oil layer a "structure", so that to reduce the contact with the biological sample dipped in the container, in order to avoid phenomena of delayed fixation (consequent hypo-fixation if the sample was dipped for 6 h only)
- Possibility to further minimize the evaporation and the perception of the typical pungent odor of formalin.

This study is carried out in order to assess the fixative properties of the formalin, with the addition of a Paraffin oil -Agar mixture (composition according to the present invention), in comparison with the fixation through traditional method (buffered neutral formalin, composition according to the known art).

### COMPARATIVE TESTS OF TYPE 1

The test provided for a comparative study between the fixation characteristics of the two compositions and precisely:
- fixation with buffered neutral formalin (composition F according to the known art);
- alternative fixative composition (buffered neutral formalin + Paraffin oil - Agar mixture, FS-A composition according to the present invention).

### Characteristics to be tested:

- Dispersion of formalin into the environment;
- "Slowing down" of the fixation time;
- Possible interferences due to the addition of the Paraffin oil - Agar mixture.

### Materials and methods:

- Sampling and fixation of hepatic porcine tissue;
- Fixation steps defined in: 6 hours;
- Subsequent processing, prior to fixation, of the hepatic withdrawals with Donatello processor;
- Sample inclusion in the control unit Canova;
- Cut of sections in paraffin with the Galileo Auto microtome;
- Microscope examination.

### Container configuration:

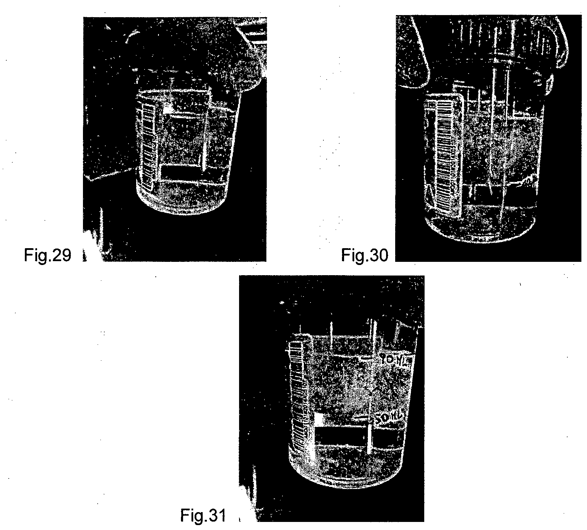

Three 150 ml containers (pre-filled at 90 ml) containing buffered neutral formalin (according to the known art), pH 7.2-7.4, have been used. (Figs. 29-31)

It was decided to add the Paraffin oil -Agar mixture in two containers in different amounts, by varying the ratio with the formalin and keeping the same final filling volume (90 ml).
- 40 ml formalin + 50 ml Oil-Agar mixture (Fig. 30);
- 50 ml formalin + 40 ml Oil-Agar mixture (Fig. 31).

### Samples used

Hepatic porcine tissue. 3 withdrawals (one per each container), so to be able to work in triple to assess possible differences, have been carried out.

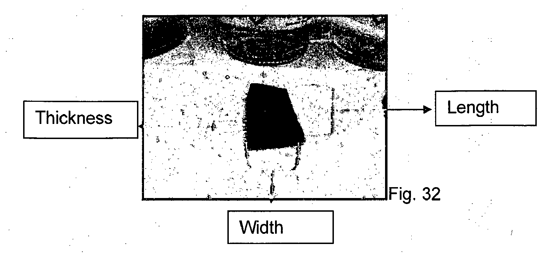

### Withdrawal size: (Fig. 32)

*Length: 2 cm;*
*Width: 1 ½ cm;*
*Thickness: 4 mm.*

### Timing

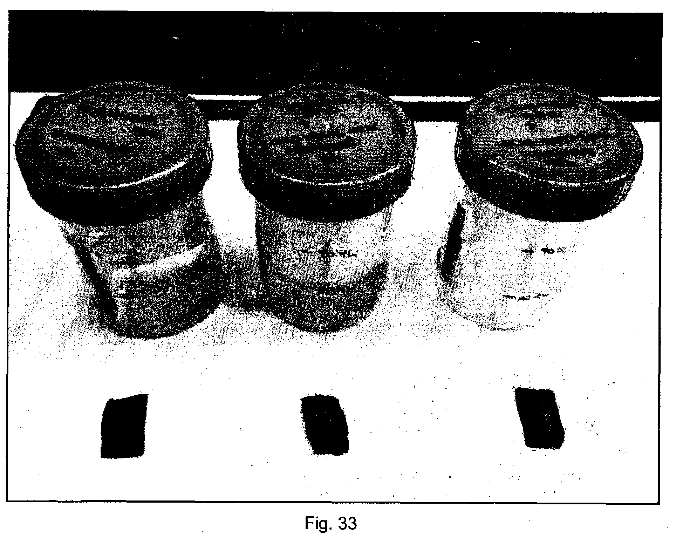

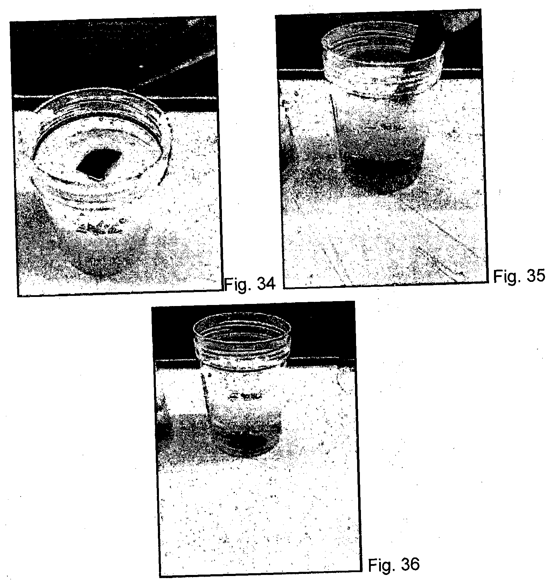

The 3 hepatic withdrawals have been simultaneously dipped in the containers containing 90 ml neutral formalin pH 7.2-7.4, 50 ml neutral formalin pH 7.2-7.4 + 40 ml Paraffin oil - Agar mixture and 40 ml neutral formalin pH 7.2-7.4 + 50 ml Paraffin oil - Agar mixture (Fig. 33).

### Processing: after 6 h from dipping

### Description of the phenomenon

The withdrawal remains in suspension in dipping the sample in the can with the Oil-Agar mixture and it is necessary, with the aid of the pliers, to push the withdrawal towards the bottom of the container. In this step, the withdrawal becomes wet in Paraffin oil - Agar but, once on the bottom of the container, it can be observed how the composition is detaching from the tissue and comes back to the surface.

The tissue is "rinsed" out of the Oil-Agar mixture in the dipping step in formalin. In this step, the fixation times listed above have been respected. The tissue sample is again "oily" following the contact with the paraffin oil during the extraction of the same from the container.

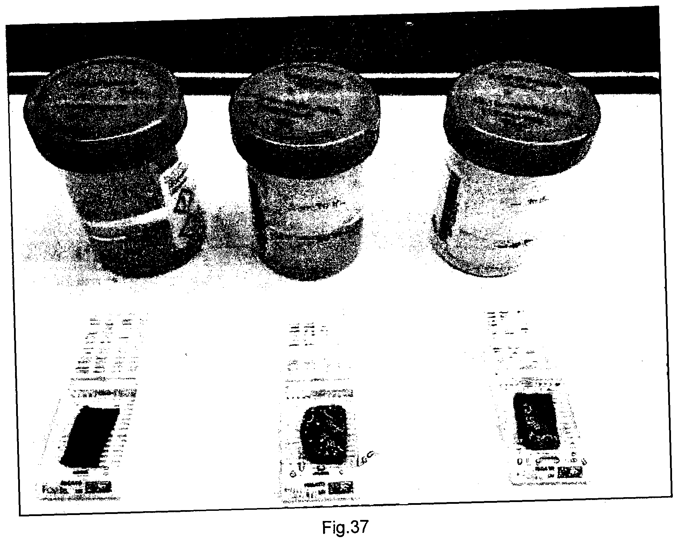

**N.B:** The hepatic tissue sample (Fig. 37, containers 2 and 3 from the left) is "oily" following the contact with the paraffin oil occurred during the extraction of the same from the container.

### Processing protocol:

Keeping in mind the fixation times inside the containers, the processing step has been started from water.

| | | |
|---|---|---|
| *WATER* | → | *10min* |
| *OTTIX SHAPER* | → | *1h* |
| *OTTIX PLUS* | → | *1h* |
| *OTTIX PLUS* | → | *1h and 30 min* |
| *OTTIX PLUS* | → | *1h and 30 min* |
| *OTTIX PLUS* | → | *2h* |
| *PARAFFIN* | → | *1h and 30 min* |
| *PARAFFIN* | → | *2h* |
| *PARAFFIN* | → | *2h* |

The processing has duration of 12 h and 40 min stationing in the last paraffin. **17/07/2015**

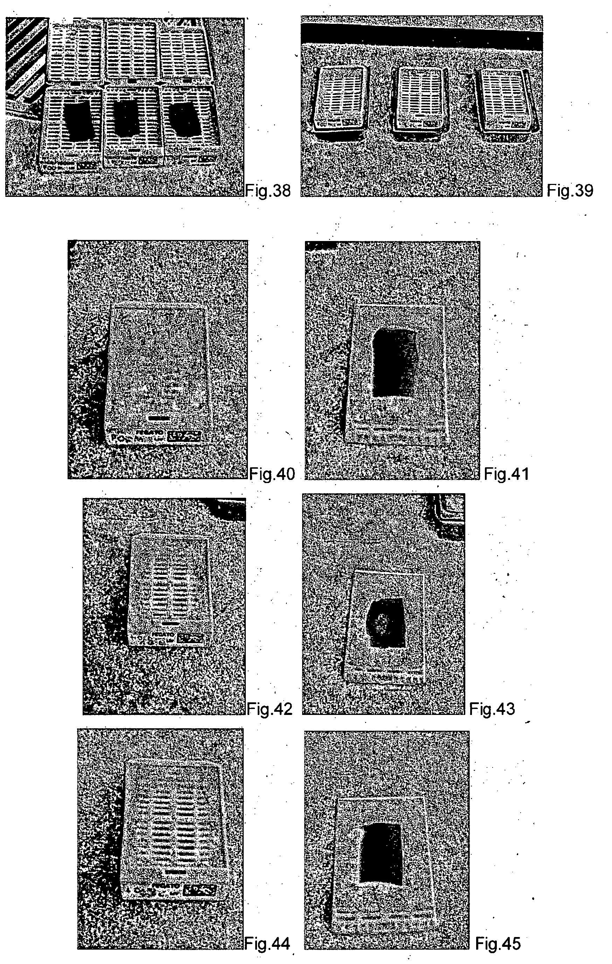

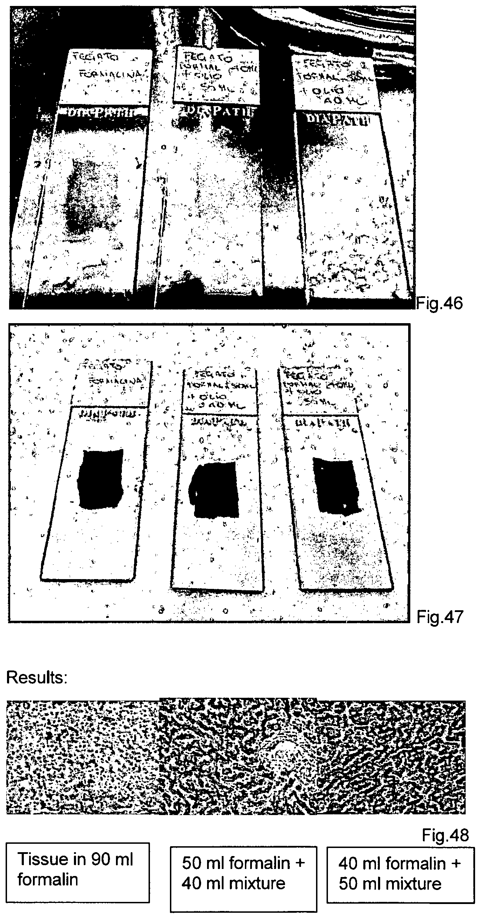

After processing, the samples have been included. (Figs. 38-45)
2µ sections which, placed on microscope slides, have been dried in oven at 70 °C for 30 min and stained according to Hematoxylin-Eosin staining protocol, have been cut. (Figs. 46-47)

### Conclusions

The fixation of the hepatic tissues carried out with the two compositions object of the comparative tests, formalin (according to the known art) and formalin + Paraffin oil - Agar mixture (according to the present invention), has been tested with fixation times of 6 h (critical time highlighted in the previous tests with paraffin oil - formalin only).

In this case, in the tissue samples fixed with the two mixtures in 6 hours, macroscopic and microscopic differences are not appreciable.

Consequently, the composition according to the present invention of formalin, paraffin oil and Agar was found particularly suitable to be used in the fixation processes of samples of biological material requiring short fixation times, around about 6 hours.

## Claims

1. A liquid composition comprising an upper layer and a bottom layer, the upper layer comprising paraffin oil and the bottom layer constituted by an aqueous solution of formaldehyde, wherein the upper layer is immiscible with the underlying formaldehyde solution.

2. Composition according to claim 1, **characterized in that** said aqueous solution is buffered.

3. Composition according to claim 1, **characterized by** comprising a buffered aqueous solution of formaldehyde, paraffin in liquid form, agar and/or agarose.

4. Composition according to claim 1, **characterized by** comprising a buffered aqueous solution of formaldehyde, paraffin in liquid form, cetyl alcohol.

5. Composition according to claim 1, **characterized by** comprising a buffered aqueous solution of formaldehyde, paraffin in liquid form, cetyl palmitate.

6. Composition according to claim1, **characterized in that** said formaldehyde in aqueous solution and said paraffin in liquid form are in a 70:30 to 95:5 ratio.

7. Composition according to claim 6, **characterized in that** said ratio between formaldehyde in aqueous solution and said paraffin in liquid form is 90:10.

8. Composition according to claim 3, **characterized in that** said agar and/or agarose is in amounts between 0.1 and 0.2% with respect to the total weight of the composition.

9. Container for the collection of samples of biological material **characterized by** being disposable and prefilled with the composition of claim 1.

10. Container for the collection of samples of biological material **characterized by** being disposable and prefilled with the composition of claim 3.

11. Use of the composition of claim 1 for the preservation of samples of biological material.

## Patentansprüche

1. Eine flüssige Zusammensetzung enthaltend eine obere Schicht und eine untere Schicht, wobei die obere Schicht Paraffinöl enthält und die untere Schicht aus einer wässrigen Formaldehydlösung besteht, wobei die obere Schicht mit der unterliegenden Formaldehydlösung nicht mischbar ist.

2. Zusammensetzung gemäß Anspruch 1, **dadurch gekennzeichnet, dass** die wässrige Lösung gepuffert ist.

3. Zusammensetzung gemäß Anspruch 1, **dadurch gekennzeichnet, dass** sie eine gepufferte wässrige Lösung von Formaldehyd, Paraffin in flüssiger Form, Agar und/oder Agarose umfasst.

4. Zusammensetzung gemäß Anspruch 1, **dadurch gekennzeichnet, dass** sie eine gepufferte wässrige Lösung von Formaldehyd, Paraffin in flüssiger Form, Cetylalkohol enthält.

5. Zusammensetzung gemäß Anspruch 1, **dadurch gekennzeichnet, dass** sie eine gepufferte wässrige Lösung von Formaldehyd, Paraffin in flüssiger Form, Cetylpalmitat enthält.

6. Zusammensetzung gemäß Anspruch 1, **dadurch gekennzeichnet, dass** das Formaldehyd in wässriger Lösung und das Paraffin in flüssiger Form in einem Verhältnis von 70:30 bis 95:5 vorliegen.

7. Zusammensetzung gemäß Anspruch 6, **dadurch gekennzeichnet, dass** das Verhältnis zwischen Formaldehyd in wässriger Lösung und dem Paraffin in flüssiger Form 90:10 beträgt.

8. Zusammensetzung gemäß Anspruch 3, **dadurch gekennzeichnet, dass** der Agar und/oder die Agarose in Mengen zwischen 0,1 und 0,2%, bezogen auf das Gesamtgewicht der Zusammensetzung enthalten ist.

9. Behälter zum Sammeln von Proben biologischen Materials, **dadurch gekennzeichnet, dass** er entsorgbar ist und mit der Zusammensetzung gemäß Anspruch 1 vorgefüllt ist.

10. Behälter zum Sammeln von Proben biologischen Materials, **dadurch gekennzeichnet, dass** er entsorgbar ist und mit der Zusammensetzung gemäß Anspruch 3 vorgefüllt ist.

11. Verwendung der Zusammensetzung gemäß Anspruch 1 zur Konservierung von Proben biologischen Materials.

## Revendications

1. Composition liquide comprenant une couche supérieure et une couche inférieure, la couche supérieure comprenant de la paraffine et la couche inférieure étant constituée d'une solution aqueuse de formaldéhyde, dans lequel la couche supérieure est non miscible avec la solution de formaldéhyde sous-jacente.

2. Composition selon la revendication 1, **caractérisée en ce que** ladite solution aqueuse est tamponnée.

3. Composition selon la revendication 1, **caractérisée en ce qu'**elle comprend une solution aqueuse tamponnée de formaldéhyde, de paraffine sous forme liquide, d'agar et/ou d'agarose.

4. Composition selon la revendication 1, **caractérisée en ce qu'**elle comprend une solution aqueuse tamponnée de formaldéhyde, de paraffine sous forme liquide, et d'alcool cétylique.

5. Composition selon la revendication 1, **caractérisée en ce qu'**elle comprend une solution aqueuse tamponnée de formaldéhyde, de paraffine sous forme liquide, et de palmitate de cétyle.

6. Composition selon la revendication 1, **caractérisée en ce que** ledit formaldéhyde en solution aqueuse et ladite paraffine sous forme liquide ont un rapport de 70:30 à 95:5.

7. Composition selon la revendication 6, **caractérisée en ce que** ledit rapport entre le formaldéhyde en solution aqueuse et ladite paraffine sous forme liquide est de 90:10.

8. Composition selon la revendication 3, **caractérisée en ce que** ledit agar et/ou agarose est présent en des quantités comprises entre 0,1 et 0,2 % par rapport au poids total de la composition.

9. Récipient pour la collecte d'échantillons de matière biologique, **caractérisé en ce qu'**il est jetable et pré-rempli avec la composition selon la revendication 1.

10. Récipient pour la collecte d'échantillons de matière biologique **caractérisé en ce qu'**il est jetable et pré-rempli avec la composition de la revendication 3.

11. Utilisation de la composition selon la revendication 1 pour la conservation d'échantillons de matière biologique.
